# EUROPEAN PATENT SPECIFICATION

(11) **EP 2 887 577 B1**
(45) Date of publication and mention of the grant of the patent: **19.02.2020**
(21) Application number: 13198946.9
(22) Date of filing: 20.12.2013
(51) Int. Cl.: H04L 12/24, H04L 29/12, H04L 29/08, H04L 29/06, H04L 12/28, H04W 76/11

(54) **METHOD FOR ESTABLISHING AND/OR CONFIGURING AN INTERNET PROTOCOL NETWORK CONNECTION BETWEEN A CUSTOMER PREMISES EQUIPMENT AND A TELECOMMUNICATIONS NETWORK**
VERFAHREN ZUR HERSTELLUNG UND/ODER KONFIGURATION EINER IP-NETZWERKVERBINDUNG ZWISCHEN EINEM TEILNEHMERENDGERÄT UND EINEM TELEKOMMUNIKATIONSNETZ
PROCÉDÉ POUR ÉTABLIR ET/OU CONFIGURER UNE CONNEXION DE RÉSEAU DE PROTOCOLE INTERNET ENTRE UN ÉQUIPEMENT DES LOCAUX D'UN CLIENT ET UN RÉSEAU DE TÉLÉCOMMUNICATIONS

(43) Date of publication of application: 24.06.2015
(73) Proprietor: Deutsche Telekom AG, 53113 Bonn (DE)
(72) Inventor: Scherer, Christoph, 64625 Bensheim (DE)
(74) Representative: Schwöbel, Thilo K.

(56) References cited:
- WO-A1-2011/079861
- WO-A1-2011/160810
- US-B2- 8 346 940
- Amit Cohen ET AL: "Migration to Ethernet-Based DSL Aggregation", Technical Report TR-101, 30 April 2006 (2006-04-30), pages 1-101, XP055135059, Retrieved from the Internet: URL:http://www.broadband-forum.org/technic al/download/TR-101.pdf [retrieved on 2014-08-18]
- Rebecca Copeland: "Converging NGN Wireline and Mobile 3G Networks with IMS: Converging NGN and 3G Mobile - Chapter "Network Admission"" In: "Converging NGN Wireline and Mobile 3G Networks with IMS: Converging NGN and 3G Mobile - Chapter "Network Admission"", 22 December 2008 (2008-12-22), Auerbach Publications 2008, XP055009303, ISBN: 978-1-42-001378-8 pages 117-155, DOI: 10.1201/9781420013788.fmatt, * section 4.4.4 *
- "Telecommunications and Internet converged Services and Protocols for Advanced Networking (TISPAN); NGN Functional Architecture; Network Attachment Sub-System (NASS)", ETSI STANDARD, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. TISPAN 2, no. V3.4.1, 1 March 2010 (2010-03-01), XP014046256,

## Description

### BACKGROUND

The present invention relates to a method for establishing and/or configuring an Internet Protocol network connection between a Customer Premises Equipment and a telecommunications network.

Typically, setting up an Internet Protocol (IP) session or connection requires an account with an access provider and/or sometimes the authentication protocol to be used. The login or access data (credentials) - e.g. username and password - have to be sent to the Customer prior to establishing the IP session or connection. In order to enhance the setup process and/or configuration, a line-based authentication can be used, wherein an identifier of the access node (access node related line ID) of an access network of the telecommunications network is used for authentication purposes within the telecommunications network. Thereby, the identifier is used as a reference for identification of the IP session or connection and the network access interface. However, a line-based authentication of this type usually requires an extensive network migration, which can only be carried out by the operator controlling the network.

Publication WO 2011/160810 A1 discloses a CPE provisioning process which allows avoiding that the user credentials have to be pre-provisioned in the CPE, but which still heavily depends on the access network. Publication WO 2011/079861 A1 discloses a mechanism for controlling setup of a packet data network connection to a specified access point name via a gateway network element in which the setup request is rejected when an existing connection to the specified access point name via the gateway network element via another different access network is detected.

### SUMMARY

An object of the present invention is to provide a method for establishing and/or configuring an IP network connection between a Customer Premises Equipment and a telecommunications network without customer and/or contract specific data (e.g. username or password) being sent to the customer, wherein the telecommunications network has, in particular, a heterogeneous infrastructure (heterogeneous telecommunications network) - i.e. different network parts (e.g. an access network, switched aggregation network, core network or network elements of the telecommunications network) are controlled by different operators.

The object of the present invention is achieved by a method according to claim 1.

It is thereby advantageously possible, to establish and/or configure a network connection between a CPE and a telecommunications network, wherein the telecommunications network has a heterogeneous network infrastructure. Preferably, an IP address for realizing the IP session or connection refers to one or more IP addresses and/or IP prefixes. Thereby, a lifecycle being independent from a Customer's contract can be realized for all layers above the IP layer by using a reference for the network access or network access interface (which is hereinafter called line identifier or line ID). In a telecommunications network with heterogeneous infrastructure, it is thereby possible for an operator to establish and/or configure an IP session or connection between a Customer Premises Equipment (CPE) - e.g. a Home Gateway (HG) - and a core network (which is under the operator's control) of the telecommunications network via an access network or any other (layer 2) network parts of the telecommunications network (which is not under the operator's control) without being dependent on wholesale products of other operators controlling the access network or network parts being used for the IP session or connection between the CPE and the core network. In this way, a uniform data- and process-model - having a uniform abstraction by means of the line identifier (line ID) - Is created independently from different network topologies (which need to be created or paid) within the Information Technology (IT) infrastructure. It is thereby advantageously possible to obtain a reduction of fees and costs. Accordingly, it is advantageously possible that the CPE can be easily reconfigured, if the CPE is (re-)connected to the core network (under control of the operator) of the telecommunications network via another network path along a route via another network part or access network (not under control of the operator).

According to the present invention, a combination of the first identification information and second identification information is used. The first identification information comprises a CPE identifier - e.g. Point-to-Point (PPP) credentials or a Dynamic Host Configuration Protocol (DHCP) unique identifier (DUID), e.g. DUID for Internet Protocol version 6 (IPv6) protocol (DHCPv6). The Internet Protocol session or connection between the CPE and the telecommunications network is established via a port of the Internet Protocol Edge node (IP Edge node), wherein the IP Edge node is a routing network element having a plurality of ports or interfaces. The second identification information is interface identification information being related to (i.e. for identification of) the port (IP Edge Port) associated with the request message and/or IP session or connection between the CPE and the IP Edge node). Preferably, all network elements between these two points (i.e. the CPE and the IP Edge node) are transparently employed within the method of the present invention.

It is an object of the present invention to differentiate between a (location) unvalidated access and a (location) validated access of the CPE to the telecommunications network, wherein the unvalidated access and the validated access are preferably differentiated in dependence of (and, e.g., a knowledge about) the IP session or connection between the CPE (being represented by a CPE identifier of the first identification information) via the (virtual or physical) IP Edge port or interface (being represented by an IP Edge port identifier of the second identification information or interface identification information).

According to the present invention, the telecommunications network comprises a network identity provider (network IDP) function, the network identity provider function comprises a storage device for storing, in a database (hereinafter also called network profile database), a plurality of network profile information elements, wherein a network profile information element of the plurality of network profile information elements is related (preferably uniquely related) to the IP Edge port being used for the IP session or connection of the CPE to the telecommunications network. The network IDP is configured to provide an (web)interface for the CPE for a location validation process, wherein, in particular, a transaction authorization number (TAN) or other credentials are used for authentication and/or authorization purposes.

According to the present invention, the network profile information element preferably comprises:
-- the second identification information, in particular the IP Edge port identifier, the second identification information being a primary key, and/or
-- location information (e.g. related to a physical location of the CPE such as address or floor), and/or
-- a CPE identifier of the first identification information, and/or
-- status information, wherein the status information is, in particular, configured to indicate a status of the IP session or connection (e.g. "location validated" or "location unvalidated"), and/or
-- the line identifier (line ID), and/or
-- policy information for specification of target IP addresses, which can be reached with the IP address associated with the IP session or connection via the IP Edge port identified by the second identification information.

According to the present invention, the telecommunication network comprises an authentication, authorization and accounting (AAA) control function, the AAA control function preferably being configured to
-- optionally provide an IP address to the CPE, and/or
-- configure the IP Edge port of the IP Edge node to specify how the IP Edge port may be used within the IP session or connection, and/or
-- perform authentication and/or authorization requests to a storage device (e.g. the storage device of the network identity provider function of the telecommunications network).

According to the present invention, the telecommunications network preferably comprises a configuration server function, the configuration server function being configured for remote configuration of the CPE.

According to the present invention, the IP Edge port associated with the IP session or connection of the CPE to the telecommunications network is "abstracted" by means of the line identifier (line ID).

According to the present invention, the telecommunications network, preferably the network IDP, comprises a provisioning interface, the provision interface being in particular configured for provisioning of the network profile information element or a piece of information of the network profile information element in dependence of the second identification information and/or the line identifier, wherein the line identifier preferably functions as a unique key (i.e. for identification of the IP Edge port related to the second identification information).

According to the present invention, the telecommunications network, preferably the AAA control function, comprises a query interface being configured to resolve (translate) the IP address (associated with the IP session or connection) into the first and/or second identification information and/or the line identifier. This means, in particular, that the query interface provides the first and/or second identification information and/or line identifier in dependence of the IP address associated with the IP session or connection.

According to the present invention, the IP session or connection (IP connectivity) is established according to the following steps:
-- sending, by the CPE - via the IP Edge port of the IP Edge node - a request for IP configuration - e.g. a DHCP or PPP request - to the AAA control function in order to obtain an IP address. An identifier (CPE identifier) is provided by the CPE (to the request message) as first identification information,
-- appending, by the IP Edge node, a second identification information (IP Edge port identifier) related to the IP Edge port being used (for the request message), wherein, for example, the second identification information comprises a port information, slot information, Virtual Local Area Network (VLAN) information, a hostname of the IP Edge node and/or a configured remote agent information,
-- sending, the first and second identification information (provided to the request message in the previous two steps) from the IP Edge node to the AAA control function (e.g. by using PPP or DHCP) and saving the first and second identification information in the telecommunications network, preferably in a storing or memory element associated with the AAA control function, wherein preferably the one or more IP addresses and/or IP prefixes are stored. Preferably, the AAA control function, in a subsequent step, executes an authentication and authorization logic.

According to the present invention, an IP connection with (location) unvalidated state (associated with the first functionality level) is established in that the AAA control function determines that a relationship between the first and second identification information (being provided by the CPE and the IP Edge node, respectively) is nonexistent within the telecommunications network. This means, for example, that the AAA control function is unable to determine a relationship between the first and second identification information. In this case, the AAA control function provides an IP address to the CPE or instructs the IP Edge node to provide an IP address to the CPE, wherein a policy is used on the IP Edge node for the IP address (i.e. a first functionality level is assigned to the IP address) having the following properties:
-- All Hypertext Transfer Protocol (HTTP) requests are redirected to a service-site (e.g. a site related to fault clearance), which can be used by a customer to obtain help services,
-- Preferably, a voice portal is used, wherein the voice portal comprises an Interactive Voice Response (IVR) system,
-- The website provided by the network IDP is reachable via the IP connection associated with the first functionality level such that the location validation process can be initiated by the customer or actor using the CPE.
-- The access of target IP addresses, which are not required for the location validation process or for customer help services are blocked.

According to the present invention, an IP connection with (location) validated state (in particular associated with the second functionality level) is preferably established according to the following steps:
-- accessing, for the IP connection associated with the first functionality level, a website of the network IDP during the location validation process,
-- determining, by the network IDP, for the IP address used for the request, the first and second identification information (if provided by the CPE) from the AAA control function, preferably from the query interface of the AAA control function,
-- creating a database entry (for the network profile information element) after an actor or user of the CPE has entered, for the IP session or connection, the location information (related to a location of the CPE), and optionally a provider information, wherein the network IDP preferably stores (in the network profile information element) of the (network profile) database: the location information (being entered by the user of the CPE), the first identification information (e.g. the CPE identifier), the status information (related to the validation status) and line identifier (which is generated by the network IDP) and policy information, wherein the policy information preferably defines a "walled-garden" of the IP connection related to the provider.

According to the present invention, the network IDP sends a configuration request message to a configuration server of the telecommunications network, such that the CPE is provided with a unique CPE identifier (i.e. uniquely related to the IP session or connection), in case that the CPE has sent the IP request message without providing the CPE identifier or the CPE identifier does not match to the IP Edge node port. A subsequent request message or all subsequent request messages (for a subsequent IP session or connection) - which are sent from the CPE to the AAA control function - preferably include the CPE identifier (as first identification information) and IP Edge port identifier (as second identification information). AAA control function requests, from network IDP, the network profile information element in dependence of the first and/or second identification information and/or second identification information including the line identifier if existent. Preferably, after the AAA control function has checked if the pair of first and second identification information match, a provider policy according to the policy information stored in the network profile information element is used, for the IP session or connection, by the telecommunications network (second functionality level). Preferably, the line identifier is stored by AAA control function, the line identifier being preferably related to the IP session or connection. Preferably, an IP request message being sent by the CPE to the AAA control function comprises the IP Edge port identifier, and the CPE identifier. Preferably, the network IDP instructs AAA control function to use the provider policy (i.e. assign the second functionality level) without terminating the IP connection associated with the first functionality level.

According to the present invention, the IP Edge port identifier (second identification information) and the CPE identifier (e.g. a set of protocol specific credentials provided by the CPE, the CPE identifier and/or other credentials as the first identification information) are used by the telecommunications network, in particular by the AAA control function, to define states and/or policies for the IP session or connection. For example, the states are defined in dependency to the relationship between the first and second identification information and/or a profile stored to the first and second identification information or situations, where the first and/or second identification information are not provided to the AAA control function,. The credentials for the CPE are preferably generated automatically i.e. the credentials are derived by the telecommunications network. In particular, the network IDP determines (within the location validation process) the second identification information (e.g. via a request to the AAA control function), wherein the first identification information is generated in dependency of the second identification information, wherein the network IDP instructs a configuration server function of the telecommunications network to configure the CPE in dependency of the first identification information (e.g. provide the first identification information and configure the CPE to use it). Preferably, the line identifier is generated by the telecommunications network, in particular by the network IDP, in a subsequent step following the location validation process. Preferably, the line identifier is only resolvable (i.e. can be resolved) by the AAA control function, if the IP session or connection is associated with a default or individual state of the defined states. Preferably, the line identifier (provided by the network IPD) is stored to an IP Edge port and is changed (by the telecommunications network), if the location validation process for an IP Edge port is performed again. Preferably, the line identifier is changed (i.e. a new line identifier is generated) by the telecommunications network, each time or if the telecommunications network determines a mismatch between the first and second identification information (which are included in the request message sent from the CPE via the IP Edge node to the AAA control function).

In particular, in a "SETUP" mode used for a location validation process, only the second identification information (port identifier or circuit identifier) related (to the IP Edge node port is provided to the AAA control function with the request message). This can be, for example, understood as a new mounted line. In this case, the first identification information do not match to the second identification information (i.e. no credentials are provided by the CPE or the credentials provided by the CPE do not match to the second identification information related to the IP Edge port of the IP Edge node).

Preferably, in a "DEFAULT" mode, the location is validated and a line identifier exists, but no dedicated profile is assigned to the IP Edge node port identified by the line identifier. In this case, the credentials provided by the CPE match to the second identification information and the network IDP comprises information about (or "knows") a database entry related the IP Edge port of the IP Edge.

In an "INDIVIDUAL" mode, the location is validated and a line identifier exists and a dedicated profile is assigned to the IP Edge node port identified by the line identifier. In this case, the first identification information (comprising the credentials) provided by the CPE match to the second identification information (related to the IP Edge port of the IP Edge node). The network IDP function has a database entry related to the IP Edge node port of the IP Edge node, the database entry being related to a dedicated profile.

Preferably, an "ERROR" mode corresponds to any other state.

According to a preferred embodiment of the present invention,
-- the first functionality level is assigned to the Internet Protocol address, if the telecommunications network determines by means of the comparison that the first and second information are unrelated, wherein, in particular, a network profile information element comprising the second identification information is retrieved by the telecommunications network in dependence of the second identification information provided by the request message, wherein a network profile according to the first functionality level is preferably stored within the network profile information element, the network profile being a generic network profile or related to the second identification information, and/or
-- the second functionality level is assigned to the Internet Protocol address, if the telecommunications network determines by means of the comparison that a relationship, preferably a unique relationship, between the first and second identification information exists, wherein the network profile information element comprising the second identification information is retrieved by the telecommunications network in dependence of the second identification information provided by the request message, wherein a network profile according to the second functionality level is preferably stored within the network profile information element.

Thereby, it is advantageously possible to provide a method for establishing and/or configuring an IP network connection between a Customer Premises Equipment and a telecommunications network, such that the IP network connection is established and/or configured without customer and/or contract specific data like a username or password being sent to the customer, especially when the telecommunications network has a heterogeneous infrastructure.

According to a preferred embodiment of the present invention, the telecommunications network preferably comprises an authentication, authorization, and accounting (AAA) function, wherein the second functionality level is only assigned to the Internet Protocol address,
-- if the AAA function of the telecommunications network determines that the relationship, preferably the unique relationship, between the first and second identification information exists, and
-- if a status information element stored in the network profile information element indicates that the location of the Customer Premises Equipment is validated, wherein the network profile information element is preferably stored within a network identity provider function of the telecommunications network.

Thereby, it is advantageously possible to reduce the logistical effort for distributing the CPE devices to customers (e.g. for pre-configuration of CPE devices or handling the authentication information a customer has to know and remember to configure the CPE for IP access to the telecommunications network).

According to a preferred embodiment of the present invention, the first identification information comprises a Customer Premises Equipment identifier, which is derived from the port of the Internet Protocol Edge node the Customer Premises Equipment is connected to.

According to the present invention, the comparison of the first identification information provided by the request message with the second identification information provided by the request message is performed by the AAA function of the telecommunications network, wherein the method preferably comprises the further step of storing, in a storage element of the telecommunications network, the first and/or second identification information transmitted with the request message and preferably the Internet Protocol address or Internet Protocol addresses provided to the Customer Premises Equipment, wherein the storage element is preferably comprised by the AAA function of the telecommunications network, wherein the AAA function preferably comprises a database for the Internet Protocol session or connection between the Customer Premises Equipment and the telecommunications network.

According to a preferred embodiment of the present invention, the method comprises the further step of performing a location validation process for enabling the assignment of the second functionality level to the Internet Protocol address associated to the Customer Premises Equipment, wherein the location validation process is preferably initiated using the Internet Protocol address associated with the first functionality level.

According to a preferred embodiment of the present invention, the location validation process comprises retrieving, for the Internet Protocol address associated with the Internet Protocol session or connection, the first and/or second identification information from the storage element of the telecommunications network.

According to a preferred embodiment of the present invention, the location validation process comprises:
-- storing, in the network profile information element, an information about the relationship, preferably the unique relationship, between the first and/or second identification information,
-- initiating an update of configuration rules stored within the Internet Protocol Edge node according to update information derived from the network profile information element.

According to a preferred embodiment of the present invention, the location validation process comprises:
-- retrieving, for the Internet Protocol address associated with the Internet Protocol session or connection, location information from, preferably a user of, the Customer Premises Equipment and storing the location information in the network profile information element,
-- generating the line identifier, the line identifier being preferably generated independent from or depending on the second identification information related to the port of the Internet Protocol Edge node,
-- providing the first identification information to the Customer Premises Equipment.

The present invention further relates to a telecommunications network according to claim 10.

Thereby, it is advantageously possible to reduce the logistical effort for distributing the CPE devices to customers (e.g. for pre-configuration of CPE devices or handling the authentication information a customer has to know and remember to configure the CPE for IP access to the telecommunications network). Especially, credentials or credential information, as prerequisite for an Internet Protocol session or connection are not required a priori.

According to a preferred embodiment of the present invention, the Internet Protocol Edge node is configured to realize the Internet Protocol session or connection of the Customer Premises Equipment according to the first and/or second functionality level depending on configuration rules stored in the Internet Protocol Edge node, wherein the configuration rules preferably comprise either IP prefixes and access and permission rules related to the IP prefixes or only IP prefixes.

According to a preferred embodiment of the present invention, the telecommunications network comprises a network identity provider function within the core network, wherein the network identity provider function is configured to retrieve a location information provided by, preferably a user of, the Customer Premises Equipment, and/or wherein the network identity provider function comprises a storage device for storing the network profile information element.

According to a preferred embodiment of the present invention, the telecommunications network comprises an authentication, authorization, and accounting (AAA) function within the core network, the authentication, authorization, and accounting function being configured to
-- extract and store the first and/or second identification information included with the request message, and/or
-- storing the Internet Protocol address associated with the Internet Protocol session or connection between the Customer Premises Equipment and the telecommunications network,
-- retrieve the network profile information element from the network identity provider function of the telecommunications network, and/or.
-- update the configuration rules associated with the port of the Internet Protocol Edge node depending on the network profile information element, and/or
-- provide the Internet Protocol address to the Customer Premises Equipment.

According to a preferred embodiment of the present invention, the telecommunications network comprises a configuration server function within the core network, the configuration server function being configured to remotely configure the Customer Premises Equipment and provide the first identification information to the Customer Premises Equipment.

The present invention further relates to a program according to claim 15.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention, which is defined by the appended claims.

The reference figures quoted below refer to the attached drawings.

### BRIEF DESCRIPTION OF THE DRAWINGS

Figures 1 and 2 illustrate schematically a telecommunications network according to the present invention.
Figure 3 illustrates schematically a communication diagram related to providing Internet Protocol connectivity.
Figure 4 illustrates schematically a communication diagram related to the location validation process.
Figure 5 illustrates schematically a flow diagram related a control function of the telecommunications network.
Figure 6 illustrates schematically a flow diagram related to a network identity provider of the telecommunications network.

### DETAILED DESCRIPTION

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

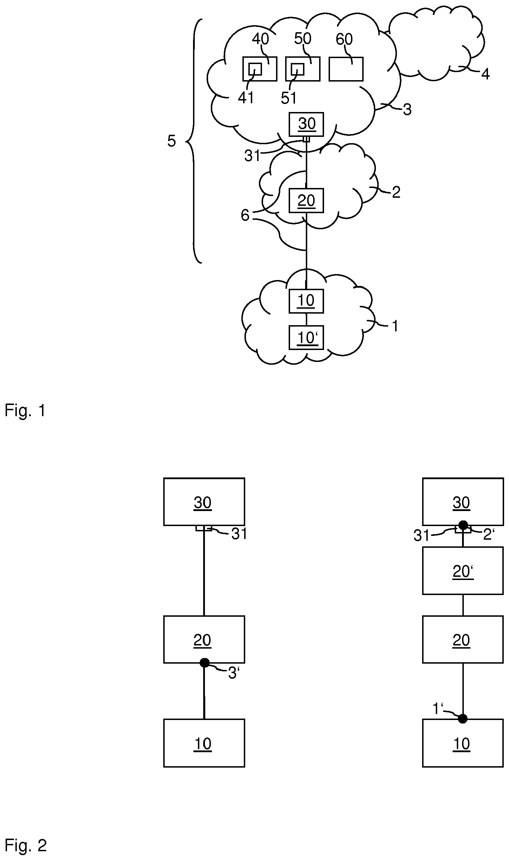

In Figure 1, a telecommunications network 5 according to the present invention is illustrated schematically. The telecommunications network 5 comprises a core network 3, an access network 2 and preferably a further access network 4. Preferably, the access network 2 and/or the further access network 4 can be understood as the parts of the telecommunications network 5 used to provide access to a comparatively large number of customers or users to the telecommunications network 5, in particular to the core network 3 of the telecommunications network. Preferably, each access network 2 is configured to provide access to the telecommunications network 5 to a local area network 1 or home network 1, which is associated with a customer.

The customer is connected to the telecommunications network 5 using a so-called CPE 10 or a dedicated CPE 10 with capabilities to establish IP connectivity. The CPE is, for example, a home gateway, a PC, a set-top box or any other suitable device 10. The CPE 10 is, in particular, a routing device installed in a user's home. Further customer premises equipments (CPEs) 10' might be present connected to the CPE. A CPE 10 according to the present invention is preferably understood as a home gateway 10 of the home network 1 or of the local area network 1 or any other network termination (NT) device. A further customer premises equipment 10' connected to the CPE 10 is hereinafter also called actor device 10', wherein the actor device 10' is associated with a user or actor using the actor device 10'.

The CPE 10 is connected to the telecommunications network 5 via an access node or switch 20 of the access network 2. The access node or switch 20 is preferably a Digital Subscriber Line Access Multiplexer (DSLAM) installed either in the building of the customer or installed at a distance of less than a few kilometers, preferably less than 1000 meters, more preferably less than 500 meters or an OLT (Optical Line Terminal) serving as access node or switch 20 of the telecommunications network 5. Preferably, a unique communication relationship exists between the CPE 10 and the IP Edge Node port 31 of the IP Edge node 30.

The CPE 10 is connected to the core network 3 of the telecommunications network 5 via a network connection 6, the network connection 6 being in particular a logical network connection (e.g. an Ethernet connection or Internet Protocol connection) and/or a physical network connection. The network connection 6 is here established between the CPE 10 and the core network 5 via the access network 2, and in particular via the access node or a switch 20 of the access network 2. It is advantageously possible according to the present invention, to establish and/or configure the IP network connection on top of connection 6 between the CPE 10 and the core network 3, even if parts of the telecommunications network 5 between the CPE 10 and the IP Edge node 30 and/or the whole access network 2 are not accessible for configuration of the network connection 6, e.g. by the operator of the core network 5. A telecommunications network 5 comprising network parts - e.g. the core network 3, the access network 2 and the further access network 4 - being operated by different operators or service providers is here called a heterogeneous telecommunications network 5.

The access node or switch 20 is connected to an Internet Protocol Edge node 30 within the telecommunications network 5 and within the core network 3. The Internet Protocol node 30 administers different functionality levels associated with different Internet Protocol addresses, the CPE 10 can access. Preferably, the Internet Protocol Edge node 30 administers the distribution of Internet Protocol addresses, the CPE 10 can use. The Internet Protocol Edge node 30 is a routing device or routing network element 30 having a plurality of access and permission rules (configuration rules) regarding different Internet Protocol addresses on different physical or virtual ports (hereinafter also called ports of the IP Edge node or IP Edge ports). Especially, the Internet Protocol Edge node 30 controls the addresses and functions are accessible by the CPE 10 on Layer 3 and Layer 4 of the OSI-Model.

The telecommunications network 5 further comprises a control function 40. According to the present invention, the control function 40 is realized by means of a centralized authentication, authorization, and accounting (AAA) function or an associated AAA node. The authentication and/or authorization functions associated with the control function 40 is realized, e.g., by means of a RADIUS (Remote Authentication Dial In User Service (RADIUS)) server node or by means of a DIAMETER server nor any other system or protocol used to configure the IP Edge node port to provide an IP address to the CPE and/or configuring different functionality levels.

It is furthermore possible that - in addition to or instead of the Internet Protocol Edge node 30 - the control function 40 administers the distribution of Internet Protocol addresses as well as different functionality levels associated with different Internet Protocol addresses, the CPE 10 can access. Preferably, the control function 40 is configured to provide an Internet Protocol address to the CPE 10.

The control function 40 is configured to initially configure and/or reconfigure the port 31 of the IP Edge node 30, which port 31 is used for an Internet Protocol session or connection between the CPE 10 and the telecommunications network 5. Preferably, the control function 40 is configured to launch authentication and/or authorization requests to a network identity provider 50 of the telecommunications network 5.

The Internet Protocol Edge node 30 furthermore controls the session-accounting for the control function 40. Additionally, the Internet Protocol Edge node 30 is configured to relay the first identification information 1' (connection related identification information and/or credential information related to the CPE 10) and to provide the second identification information 2' (interface identification information related to the port 31 of the IP Edge node 30 the CPE 10 is connected to), for authentication purposes to the control function 40. Furthermore, the Internet Protocol Edge node 30 transmits interface information related to a port 31 of the Internet Protocol Edge node 30. Preferably, the Internet Protocol Edge node 30 furthermore controls the bandwidth (on an Internet Protocol level) for the upstream and downstream dataflow for one or more defined data classes.

Furthermore, the telecommunications network 5 comprises a network identity provider function (hereinafter also called network IDP) 50. The network IDP 50 is especially used to handle managing of authentication and authorization for a plurality of ports of the IP Edge node, wherein only one port 31 is shown. According to a preferred embodiment of the present invention, a storage device is associated with the network IDP 50, wherein the storage device is configured for storing a network profile information element 51 associated with the port 31 of the Internet Protocol Edge node 30. Preferably, a plurality of such network profile information elements (not shown) is stored in a storage device of the network IDP 50. Preferably, the storage device of the network IDP 50 has a (network profile) database, which comprises the plurality of network profile information elements. Preferably, a primary key of the database is an IP Edge port identifier (second identification information) associated with a port of the plurality of ports of the IP Edge node 30. For example, the network profile information element 51 comprises an IP Edge port identifier of the second identification information 2' related to the port 31 of the IP Edge node 30. It is preferred according to the present invention, that there exists one network profile information element for each port of the plurality of ports of the IP Edge node 30, wherein each network profile information element comprises a location information, connection related identification information, status information and/or a line identifier information and/or policy information, wherein the policy information is preferably related to permission and/or denial rules associated with one or more target addresses, in particular Internet Protocol addresses being reachable by the CPE 10. For example, the network profile information element 51 is related to port 31 of the IP Edge node 30, to which the CPE 10 is connected to.

In Figure 2, a telecommunications network 5 according to the present invention is schematically illustrated.

According to Figure 2, the CPE 10 is connected via access node or switch 20 of the access network 2 and via port 31 of the IP Edge node 30 of the core network 3 to the telecommunications network 5. The CPE 10 may be connected to the telecommunications network via one or several layer 2 aggregation elements 20' existing between the access node or switch 20 the CPE is connected to and the IP Edge node 30. For example, the layer 2 aggregation element 20' is a part of the access network 2, for which a network-design cannot be controlled by the provider of the IP connectivity to the CPE 10. The first and second identification information 1', 2' are used for establishing and/or configuring the IP network connection on top of the network connection 6 between the CPE 10 and the telecommunications network 5. Here, the first identification information 1' is related to the CPE 10 and the second identification information 2' is related to the port 31 of the IP Edge node 30 the CPE 10 is connected to.

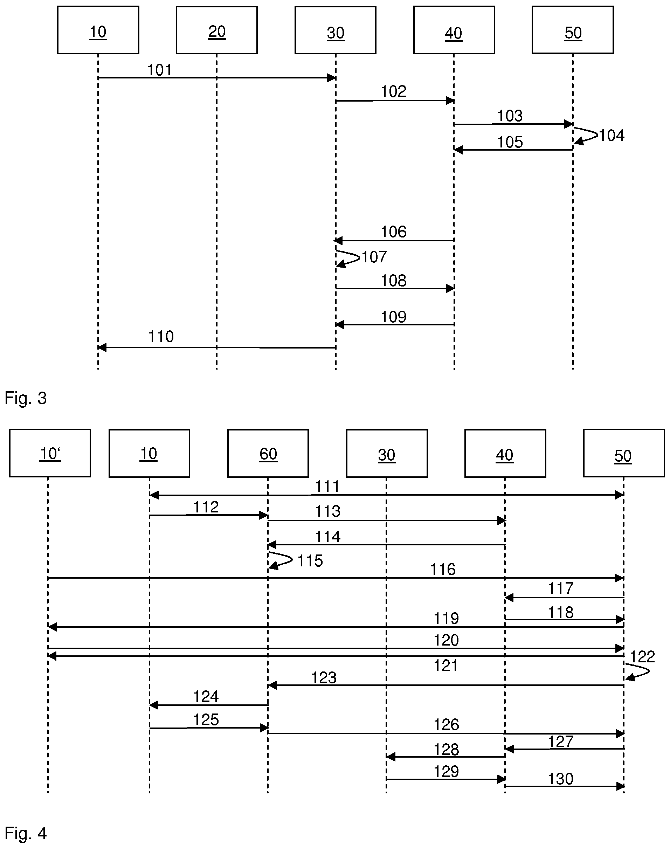

In Figure 3, a communication diagram related to providing Internet Protocol connectivity between the CPE 10 and the telecommunications network 5 is illustrated schematically. Preferably, the Internet Protocol connectivity is provided according to a method of the present invention, wherein an IP network connection between the Customer Premises Equipment 10 and a telecommunications network 5 is established and/or configured. The method comprises the following steps:

In a first step 101, an IP connection on top of connection 6 is triggered between the CPE 10 and the IP Edge node 30, preferably via the access network 2, in particular a layer 2 network (e.g. according to the Open Systems Interconnection (OSI) model), wherein the connection is established via an access node or switch 20 of the access network 2. In the first step 101, the CPE 10 sends a request (request message) via the IP Edge port 31 of the IP Edge node 30, wherein an IP address is requested at the AAA control function 40 by sending the request via the IP Edge port 31. For example, the request is a Dynamic Host Configuration Protocol (DHCP) request or a request using the Point-to-Point Protocol (PPP). The first identification information 1' provided by the CPE 10 is included with the request message. Preferably, the first identification information 1' is configured for identification and/or authentication of the CPE 10 by the telecommunications network 5. Here, the first identification information 1' comprises a CPE 10 identifier for identification of the CPE 10 - e.g. a PPP username or DHCP unique identifier (e.g. DHCPv6 DUID) for Internet Protocol version 6 (IPv6).

In a second step 102, the IP Edge node 30 (IP Edge router 30) appends or adds to the request message a second identification information 2' (interface identification information) related to the IP Edge port 31 being used by the request message sent from the CPE 10 to the AAA control function 40.The second identification information 2' comprises an IP Edge port identifier existing within the telecommunications network 5 for identification of the IP Edge port 31 of the IP Edge router 30. For example, the second identification information 2' comprises information about at least one of the following: port, slot, Virtual Local Area Network (VLAN) information and/or a hostname and/or configured remote agent information, wherein the configured remote agent information is preferably stored on the IP Edge node 30 and/or access node 20. The request message comprising the second identification information 2' and the CPE 10 identifier is sent from the IP Edge node 30 to the AAA control function 40.

In a third step 103, an authentication and/or network profile request is sent from the AAA control function 40 to the network IDP function 50. In a fourth step 104, an authentication step is performed by the network IDP function 50, wherein a network profile information element 51 is determined by the IDP function 50. For example, the network profile information element 51 is determined by a query in a database associated with the IDP function 50, wherein a primary key is related to the second identification information 2' related to the IP Edge port 31 of the IP Edge node 30. Preferably, the network profile information element 51 is a return value obtained in dependence of the second identification information 2' related to the IP Edge port 31. In a fifth step 105, the network profile information element 51 or a piece of information comprises by the network profile information element 51 is provided from the IDP function 50 to the AAA control function 40.

In a sixth step 106, the AAA control function 40 sends a "set configuration and/or lifetime of the configuration" instruction to the IP Edge node 30. In a seventh step 107, the configuration is activated at the IP Edge node 30 for the IP Edge node port (31). In an eighth step 108, the IP Edge node 30 sends an acknowledge message to the AAA control function 40. Preferably, if the IP Edge node 30 administers the IP address, then the IP Edge node 30 provides the IP address to the AAA control function 40.

In a ninth step 109, the AAA control function 40 provides the IP connection information (i.e. the one or more IP addresses and/or IP prefixes and/or information about Domain Name Server (DNS) and/or information about a default gateway)for the CPE 10 to the IP Edge node 30. In a tenth step 110, the IP Edge node 30 relays the IP connection information to the CPE 10.

In Figure 4, a communication diagram related to the location validation process is illustrated schematically. Here, only the location validation process according to one embodiment of the method of the present invention is shown.

In an eleventh step 111, an Internet Protocol connectivity (i.e. a host-to-host communication) is initiated between the CPE 10 and the network identity provider 50 of the telecommunications network 5. According to one embodiment of the present invention, step 111 substantially comprises performing the first step 101 to tenth step 110 as illustrated in Figure 3.

In a twelfth step 112, the CPE 10 requests a configuration from the configuration server function 60 In a thirteenth step 113, the configuration server function 60 requests - by using the IP address used for the IP network connection on top of the network connection 6 as parameter - an IP Edge port identifier (related to the IP Edge port 31 the CPE 10 is connected to) with optionally additional IP session or connection information. In a fourteenth step 114, the AAA control function 40 answers the request, wherein the requested information is provided to the configuration server function 60. In a fifteenth step 115, the configuration server function 60 is waiting for credentials being provided by the Network IDP function 50.

In a sixteenth step 116, the location validation process according to one embodiment of the present invention is triggered on a network IDP portal of the network IDP 50. Preferably, the location validation process is triggered by an actor 10' (e.g. a user) or an actor device 10' (e.g. a device 10' being used by a user for the location validation process), wherein the location validation process is triggered, by the actor 10' or actor device 10', by using the IP network connection on top of the network connection 6 of the CPE 10 to the telecommunications network 5.

In a seventeenth step 117, the network IDP 50 requests - by using the IP address used for the IP network connection on top of the network connection 6 as parameter-an IP Edge port identifier (related to the IP Edge port 31 the CPE 10 is connected to) with optionally additional IP session or connection information from the AAA control function 40. In an eighteenth step 118, the AAA control function 40 answers the request of the seventeenth step 117, wherein the requested information is provided to the network IDP 50.

In a nineteenth step 119, the network IDP 50 requests location information from the actor 10' or actor device 10', in particular via the Internet Protocol network connection on top of the network connection 6. In a twentieth step 120, the actor 10' or actor device 10' provides the location information and optionally provider related information (e.g. information about a preferred provider) to the network IDP 50. In a twenty first step 121, the network IDP 50 sends an acknowledge message to the actor 10' or actor device 10', thereby informing the actor 10' or actor device 10' about a successful validation. In a twenty second step 122, the network IDP 50 creates a network profile information element 51, in particular within a (network profile) database of the network IDP 50. Preferably, the network profile information element 51 is related to a network profile being - preferably uniquely - related to the IP Edge port 31. Preferably, the network profile information element 51 comprises information about a line identifier for the IP Edge port 31, the location information provided by the actor 10' or actor device 10', and in particular a default configuration related to the provider. In a twenty third step 123, the network IDP 50 provides credentials being derived from the second information 2' to the configuration server function 60 related to the IP Edge port identifier (related to the IP Edge port 31 the CPE 10 is connected to) with optionally additional IP session or connection information. In a twenty fourth step 124, the configuration server function 60 provides (e.g. configures) the credentials to the CPE 10. In a twenty fifth step 125, the CPE 10 acknowledges a new configuration - which is in particular obtained by remote configuration of the CPE 10 by the configuration server function 60 - to the configuration server 60. In a twenty sixth step 126, the configuration server function 60 sends an acknowledge message to the network IDP 50. In a twenty seventh 127, the network IDP 50 sends an update instruction to the AAA control function 40, the update instruction being configured to instruct the AAA control function 40 to update a network profile for the IP Edge port 31. In a twenty eighth step 128, the AAA control function 40 updates a configuration or configuration rules associated with the IP Edge port 31 of the IP Edge node 30. In a twenty ninth step 129, the IP Edge node 30 acknowledges the update to the AAA control function 40. In a thirtieth step 130, the AAA control function 40 sends an acknowledge message - thereby confirming the update - to the network IDP 50.

According to one preferred embodiment of the present invention, the steps 101 to 110 and/or steps 111 to 130 are executed by the method in sequential order (especially in time) and/or relate to a logical order.

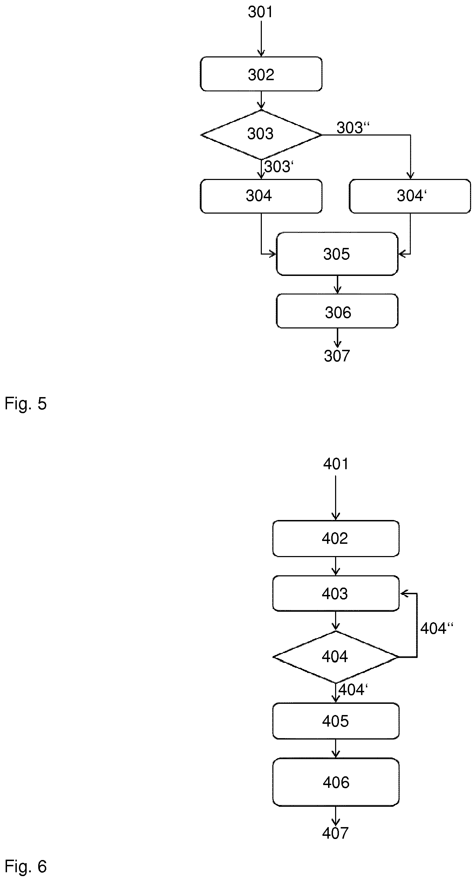

Figure 5 illustrates schematically a flow diagram related a control function 40 of the telecommunications network. The method described in Figure 5 substantially corresponds to the other embodiments of the present invention. Here, the logic executed by the AAA control function 40 within the method according to the present invention is described. Preferably, this logic describes a generic flow, not a flow needed by a specific protocol implementation like, e.g., used within a PPP session establishment between an IP Edge node 30 and a RADIUS server. The logic comprises the following steps:

In a further first step 301, the request (request message) is received at the AAA control function 40, wherein the request message is configured to request an IP configuration, wherein the request message is sent, in particular in the second step 102, by the IP Edge node 30. The request message comprises the first identification information 1' related to the CPE 10 and the second identification information 2' related to the port 31 (IP Edge port 31) of the IP Edge node 30, to which the CPE 10 is connected to. The second identification information 2' is for example the IP Edge port identifier 2'.

In a further second step 302, the AAA control function 40 compares the first identification information 1' (provided by the CPE 10) with the second identification information 2'. In a further third step 303, the AAA control function 40 determines, if the first identification information 1' matches to the second identification information 2'. If the result of the comparison (or determination of the match) is "yes", the AAA control function 40 requests, in a further fourth step 304, from the network IDP 50, a network profile information element 51 (e.g. comprising a configuration profile related to the IP Edge port 31 of the IP Edge node 30). If the result of the determination of the match is "no", the AAA control function 40 chooses (e.g. selects or requests from the Network IDP 50), in another further fourth step 304' a configuration profile for the location validation process. Preferably, selecting a configuration profile means that the configuration profile is preconfigured and selected from a stored position of the AAA control function 40.

A further fifth step 305 is executed after steps 304 and 304', respectively. In the further fifth step 305, the AAA control function 40 stores the first identification information 1' (e.g. CPE identifier provided by the CPE 10) and the second identification information 2' (e.g. the IP Edge port identifier provided by the IP Edge node 30) to the IP Edge Port configuration (e.g. being valid for the PPP session) and/or the IP address provided to or associated with the IP Edge port 31.

In a further sixth step 306, the configuration for the IP Edge port 31 is provided to the IP Edge node 30 for use with the IP Edge port 31. In a further seventh step 307, the IP Edge port 31 is configured by the IP Edge node 30 and the CPE 10 receives the corresponding IP address (e.g. from the IP Edge node 30 or from the AAA control function 40).

Figure 6 illustrates schematically a flow diagram related to a network identity provider 50 of the telecommunications network. The method described in Figure 6 substantially corresponds to the other embodiments of the present invention. Here, the logic executed by the network IDP 50 within the method according to the present invention is described. Preferably, this logic describes a generic flow, not a flow needed by a specific technical implementation like e.g. used within a Technical Report 069 (TR069) setup or the like. In particular, the line identifier (line ID) is not used in any technical protocol between network elements and AAA control function 40. The line identifier is preferably only used as reference for a location validated connectivity towards an Operational Support System (OSS) provisioning system in order to set a (network) profile for the location validated connectivity (i.e. the IP session or connection). The logic comprises the following steps:

In an even further first step 401, the actor 10' is redirected to a location validation portal on the network IDP 50, wherein the IP address associated with the first functionality level is used for the IP session or connection between the CPE 10 and the network IDP 50. Thereby, the IP address (which is provided by the AAA control function 40 or by the IP Edge node 30) is related to the IP Edge port 31 of the IP Edge node 30. In an even further second step 402, a request (i.e. further request message) is sent from the network IDP 50 to the AAA control function 40, the request being configured for requesting an information related to the IP address, in particular the second identification information 2' (i.e. IP Edge port identifier related to the IP Edge port 31) and/or first identification information (i.e. CPE 10 identifier). In an even further third step 403, the network IDP 50 requests or asks for location information (e.g. address, floor, etc.) at the CPE 10, preferably at the user 10' or actor 10' of the CPE 10. In an even further fourth step 404, the network IDP checks, if the location information entered is valid or reasonable (for example, the location information is invalid/unreasonable, if a location has been entered, which is related to a different country than the country associated with the telecommunications network). In another even further fourth step 404", if the result of the check is "no", the step 404 is preferably executed again. In yet another even further fourth step 404', if the result of the check is "yes", the network IDP 50 performs an even further fifth step 405. In the even further fifth step 405, the first identification information 1' related to the CPE 10 (e.g. the CPE 10 identifier - i.e. information for identification of the CPE 10 and/or the access interface of the CPE 10) is derived from or determined depending on the second identification information 2' (e.g. IP Edge port identifier). Preferably, the first identification information 1' is provided (e.g. in one of the following steps or at the end of the location validation process) to the CPE 10 for use by the CPE 10 within next requests. Preferably, the first identification information 1' is send to the configuration server function 60 associated with the CPE 10. In an even further sixth step 406, a database entry is generated for the network profile information element 51 related to the IP Edge port 31, the network profile information element 51 comprising the first and/or second identification information 1', 2' and/or the policy information, preferably associated with a default or provider policy. Preferably, the line identifier is generated to be used as external reference for the location validated IP Edge port 31. In an even further seventh step 407, the network IDP 50 provides a configuration profile for the location validated IP Edge port 31 (comprised by the network profile information element 51) with the line identifier used as a reference for provisioning of the configuration profile.

## Claims

1. Method for establishing and/or configuring an Internet Protocol network connection between a Customer Premises Equipment (10) and a telecommunications network (5), the telecommunications network (5) comprising an access network (2) and a core network (3), wherein the core network (3) comprises an authentication, authorization, and accounting, AAA, function (40) and a network identity provider, IDP, function (50), wherein an Internet Protocol Edge node (30) is associated to the access network (2) and to the core network (3), the method comprising the steps of:
-- transmitting a request message from the Customer Premises Equipment, CPE, (10) via the access network (2) and via a port (31) of the Internet Protocol Edge node (30) to the authentication, authorization, and accounting function (40), wherein an Internet Protocol address for realizing an Internet Protocol connection between the Customer Premises Equipment (10) and the telecommunications network (5) is requested with the request message, wherein a first identification information (1') is provided by the Customer Premises Equipment (10) to the request message, wherein the first identification information (1') comprises a Customer Premises Equipment (10) identifier,
-- appending, by the Internet Protocol Edge node (30), a second identification information (2') to the request message, wherein the second identification information (2') is an interface identification information being related to the port (31) of the Internet Protocol Edge node (30) associated with the request message, wherein the first and second identification information (1' ,2') are sent from the Internet Protocol Edge node (30) to the authentication, authorization, and accounting function (40), wherein the first and second identification information (1' ,2') are saved in the telecommunications network (5),
-- providing, by the telecommunications network (5), the Internet Protocol address to the Customer Premises Equipment (10) for realizing the Internet Protocol connection,
-- determining, by the authentication, authorization, and accounting function (40), whether a relationship between the first and second identification information (1', 2') exists within the telecommunications network (5),
-- assigning, to the Internet Protocol address, a first or a second functionality level depending on the existence of the relationship between the first identification information (1') and the second identification information (2'), wherein the first functionality level is associated with an Internet Protocol connection with location unvalidated state and is assigned in case the relationship between the first and second identification information (1', 2') is nonexistent within the telecommunications network (5), wherein the first functionality level comprises the use of a policy on the Internet Protocol Edge node (30) having the following properties:
-- All Hypertext Transfer Protocol, HTTP, requests are redirected to a service-site, which can be used by a customer to obtain help services,
-- a website provided by the network identity provider function (50) is reachable via the Internet Protocol connection associated with the first functionality level such that a location validation process can be initiated by the customer or actor using the Customer Premises Equipment (10),
-- access to target IP addresses, which are not required for the location validation process or for customer help services, is blocked.

2. Method according to claim 1, wherein
-- the first functionality level is assigned to the Internet Protocol address, if the telecommunications network (5) determines that the first and second identification information (1', 2') are unrelated, wherein, in particular, a network profile information element (51) comprising the second identification information (2') is retrieved by the telecommunications network (5) in dependence of the second identification information (2') provided by the request message, wherein a network profile according to the first functionality level is stored within the network profile information element (51), the network profile being related to the second identification information (2'), and/or
-- the second functionality level is assigned to the Internet Protocol address, if the telecommunications network (5) determines that the relationship between the first and second identification information (1', 2') exists, wherein the network profile information element (51) comprising the second identification information (2') is retrieved by the telecommunications network (5) in dependence of the second identification information (2') provided by the request message, wherein a network profile according to the second functionality level is stored within the network profile information element (51).

3. Method according to one of the preceding claims, wherein the second functionality level is only assigned to the Internet Protocol address
-- if the AAA function (40) of the telecommunications network (5) determines that the relationship between the first and second identification information (1', 2') exists, and
-- if a status information element stored in a network profile information element (51) indicates that a location of the Customer Premises Equipment (10) is validated, wherein the network profile information element (51) is stored within a network identity provider function (50) of the telecommunications network (5).

4. Method according to one of the preceding claims, wherein the first identification information (1') comprises a Customer Premises Equipment (10) identifier, which is derived from the port (31) of the Internet Protocol Edge node (30) the Customer Premises Equipment (10) is connected to.

5. Method according to one of the preceding claims, wherein the method comprises the further step of storing, in a storage element (41) of the telecommunications network (5), the first and/or second identification information (1', 2') transmitted with the request message and the Internet Protocol address or Internet Protocol addresses provided to the Customer Premises Equipment (10), wherein the storage element (41) is comprised by the AAA function (40) of the telecommunications network (5), wherein the AAA function (40) comprises a database for the Internet Protocol connection between the Customer Premises Equipment (10) and the telecommunications network (5).

6. Method according to one of the preceding claims, wherein the method comprises the further step of performing the location validation process for enabling the assignment of the second functionality level to the Internet Protocol address associated to the Customer Premises Equipment (10), wherein the location validation process is initiated using the Internet Protocol address associated with the first functionality level.

7. Method according to claim 6, wherein the location validation process comprises retrieving, for the Internet Protocol address associated with the Internet Protocol connection, the first and/or second identification information (1', 2') from a storage element (41) of the telecommunications network (5).

8. Method according to claim 6 or 7, wherein the location validation process comprises:
-- storing, in a network profile information element (51), an information about a relationship between the first and/or second identification information (1', 2'),
-- initiating an update of configuration rules stored within the Internet Protocol Edge node (30) according to update information derived from the network profile information element (51), wherein the configuration rules are a plurality of access and permission rules regarding different ports of the Internet Protocol Edge node (30).

9. Method according to one of claims 6 to 8, wherein the location validation process comprises:
-- retrieving, for the Internet Protocol address associated with the Internet Protocol connection, location information from a user of the Customer Premises Equipment (10) and storing the location information in a network profile information element (51), wherein the location information is related to a physical location of the Customer Premises Equipment (10),
-- generating a line identifier identifying the Internet Protocol Edge node (30), the line identifier being generated independent from or depending on the second identification information (2') related to the port (31) of the Internet Protocol Edge node (30),
-- providing the first identification information (1') to the Customer Premises Equipment (10).

10. Telecommunications network (5) comprising an access network (2) and a core network (3), the telecommunications network (5) being configured for establishing and/or configuring an Internet Protocol network connection of a Customer Premises Equipment (10) to the telecommunications network (5), wherein the core network (3) comprises an authentication, authorization, and accounting, AAA, function (40) and a network identity provider, IDP, function (50), wherein the telecommunications network (5) comprises an Internet Protocol Edge node (30) being associated to the access network (2) and to the core network (3), wherein the Internet Protocol Edge node (30) comprises a port (31), wherein the Customer Premises equipment (10) is configured to transmit a request message, requesting an Internet Protocol address for realizing an Internet Protocol connection between the Customer Premises Equipment (10) and the telecommunications network (5), wherein the request message comprises a first identification information (1') provided by the Customer Premises Equipment (10) and the first identification information (1') comprises a Customer Premises Equipment (10) identifier, wherein the authentication, authorization, and accounting function (40) is configured to receive the request message being transmitted from the Customer Premises Equipment (10) via the access network (2) and via the port (31) of the Internet Protocol Edge node (30) at the core network (3), , wherein the Internet Protocol Edge node (30) is configured to append a second identification information (2') to the request message, wherein the second identification information (2') is interface identification information being related to the port (31) of the Internet Protocol Edge node (30) associated with the request message, wherein the Internet Protocol Edge node (30) is configured to send the first and second identification information (1' ,2') to the authentication, authorization, and accounting function (40), wherein the telecommunications network (5) is configured to save the first and second identification information (1' ,2'), wherein the telecommunications network (5) is configured to provide the Internet Protocol address to the Customer Premises Equipment (10) for realizing the Internet Protocol connection, wherein the authentication, authorization, and accounting function (40) is configured to determine whether a relationship between the first and second identification information (1', 2') exists within the telecommunications network (5), wherein the telecommunications network (5) is configured to assign a first or a second functionality level to the Internet Protocol address depending on the existence of the relationship between the first identification information (1') and the second identification information (2'), wherein the first functionality level is associated with an Internet Protocol connection with location unvalidated state and is assigned in case the relationship between the first and second identification information (1', 2') is nonexistent within the telecommunications network (5), wherein the first functionality level comprises the use of a policy on the Internet Protocol Edge node (30) having the following properties:
-- All Hypertext Transfer Protocol, HTTP, requests are redirected to a service-site, which can be used by a customer to obtain help services,
-- a website provided by the network identity provider function (50) is reachable via the Internet Protocol connection associated with the first functionality level such that a location validation process can be initiated by the customer or actor using the Customer Premises Equipment (10),
-- access to target IP addresses, which are not required for the location validation process or for customer help services, is blocked.

11. Telecommunications network (5) according to claim 10, wherein the Internet Protocol Edge node (30) is configured to realize the Internet Protocol connection of the Customer Premises Equipment (10) according to the first and/or second functionality level depending on configuration rules stored in the Internet Protocol Edge node (30), wherein the configuration rules comprise either IP prefixes and access and permission rules related to the IP prefixes or only IP prefixes.

12. Telecommunications network (5) according to one of claims 10 or 11, wherein the network identity provider function (50) is configured to retrieve a location information provided by a user of the Customer Premises Equipment (10), wherein the location information is related to a physical location of the Customer Premises Equipment (10), and/or wherein the network identity provider function (50) comprises a storage device for storing a network profile information element (51).

13. Telecommunications network (5) according to one of claims 10 to 12, wherein the authentication, authorization, and accounting function (40) is configured to
-- extract and store the first and/or second identification information (1', 2') included with the request message, and/or
-- storing the Internet Protocol address associated with the Internet Protocol connection between the Customer Premises Equipment (10) and the telecommunications network (5),
-- retrieve a network profile information element (51) from the network identity provider (50) function of the telecommunications network (5), and/or.
-- update the configuration rules associated with the port (31) of the Internet Protocol Edge node (30) depending on the network profile information element (51), and/or
-- provide the Internet Protocol address to the Customer Premises Equipment (10).

14. Telecommunications network (5) according to one of claims 10 to 13, wherein the telecommunications network (5) comprises a configuration server function (60) within the core network (3), the configuration server function (60) being configured to remotely configure the Customer Premises Equipment (10) and provide the first identification information (1') to the Customer Premises Equipment (10).

15. Program comprising a computer readable program code for controlling a telecommunications network (5), the computer program code, when executed on one or more computers, causes the one or more computers to perform a method according to any of claims 1 to 9.

## Patentansprüche

1. Verfahren zum Herstellen und/oder Konfigurieren einer Internet Protocol-Netzverbindung zwischen einer Kundenstandortausrüstung (10) und einem Telekommunikationsnetz (5), wobei das Telekommunikationsnetz (5) ein Zugangsnetz (2) und ein Kernnetz (3) umfasst, wobei das Kernnetz (3) eine Authentifizierungs-, Autorisierungs- und Abrechnungs (Authentication, Authorization, and Accounting, AAA)-Funktion (40) und eine Netzidentitätsanbieter (Network Identity Provider, IDP)-Funktion (50) umfasst, wobei ein Internet Protocol Edge-Knoten (30) dem Zugangsnetz (2) und dem Kernnetz (3) zugeordnet ist, wobei das Verfahren die folgenden Schritte umfasst:
- Senden einer Anforderungsnachricht von der Kundenstandortausrüstung (Customer Premises Equipment, CPE) (10) über das Zugangsnetz (2) und über einen Port (31) des Internet Protocol Edge-Knotens (30) an die Authentifizierungs-, Autorisierungs- und Abrechnungsfunktion (40), wobei mit der Anforderungsnachricht eine Internet Protocol-Adresse zur Realisierung einer Internet Protocol-Verbindung zwischen der Kundenstandortausrüstung (10) und dem Telekommunikationsnetz (5) angefordert wird, wobei durch die Kundenstandortausrüstung (10) eine erste Identifizierungsinformation (1') für die Anforderungsnachricht bereitgestellt wird, wobei die erste Identifizierungsinformation (1') eine Kennung der Kundenstandortausrüstung (10) umfasst,
- Anhängen, durch den Internet Protocol Edge-Knoten (30), einer zweiten Identifizierungsinformation (2') an die Anforderungsnachricht, wobei die zweite Identifizierungsinformation (2') eine Schnittstellenidentifizierungsinformation ist, die mit dem Port (31) des Internet Protocol Edge-Knotens (30) in Beziehung steht, welcher der Anforderungsnachricht zugeordnet ist, wobei die erste und die zweite Identifizierungsinformation (1', 2') von dem Internet Protocol Edge-Knoten (30) an die Authentifizierungs-, Autorisierungs- und Abrechnungsfunktion (40) gesendet werden, wobei die erste und die zweite Identifizierungsinformation (1', 2') in dem Telekommunikationsnetz (5) gespeichert sind,
- Übermitteln, durch das Telekommunikationsnetz (5), der Internet Protocol-Adresse an die Kundenstandortausrüstung (10) zum Realisieren der Internet Protocol-Verbindung,
- Bestimmen, durch die Authentifizierungs-, Autorisierungs- und Abrechnungsfunktion (40), ob eine Beziehung zwischen der ersten und der zweiten Identifizierungsinformation (1', 2') innerhalb des Telekommunikationsnetzes (5) besteht,
- Zuweisen, zu der Internet Protocol-Adresse, einer ersten oder einer zweiten Funktionalitätsebene in Abhängigkeit vom Vorhandensein der Beziehen zwischen der ersten Identifizierungsinformation (1') und der zweiten Identifizierungsinformation (2'), wobei die erste Funktionalitätsebene einer Internet Protocol-Verbindung mit Standort-unvalidiertem Zustand zugeordnet ist und für den Fall zugewiesen wird, dass die Beziehung zwischen der ersten und der zweiten Identifizierungsinformation (1', 2') innerhalb des Telekommunikationsnetzes (5) nicht existiert, wobei die erste Funktionalitätsebene das Verwenden einer Richtlinie auf dem Internet Protocol Edge-Knoten (30) umfasst, welche die folgenden Eigenschaften aufweist:
- alle Hypertext Transfer Protocol (HTTP)-Anforderungen werden zu einer Dienst-Site umgeleitet, die durch einen Kunden genutzt werden kann, um Hilfe-Leistungen zu erhalten,
- eine Website, die durch die Netzidentitätsanbieterfunktion (50) bereitgestellt wird, kann über die Internet Protocol-Verbindung erreicht werden, die der ersten Funktionalitätsebene zugeordnet ist, dergestalt, dass ein Standortvalidierungsprozess durch den Kunden oder Akteur unter Verwendung der Kundenstandortausrüstung (10) initiiert werden kann,
- der Zugriff auf Ziel-IP-Adressen, die nicht für den Standortvalidierungsprozess oder für Kundenhilfeleistungen benötigt werden, wird gesperrt.

2. Verfahren nach Anspruch 1, wobei
- die erste Funktionalitätsebene der Internet Protocol-Adresse zugeordnet wird, falls das Telekommunikationsnetz (5) bestimmt, dass die erste und die zweite Identifizierungsinformation (1, 2') nicht miteinander in Beziehung stehen, wobei insbesondere ein Netzprofilinformationselement (51), das die zweite Identifizierungsinformation (2') umfasst, durch das Telekommunikationsnetz (5) in Abhängigkeit von der durch die Anforderungsnachricht bereitgestellten zweiten Identifizierungsinformation (2') abgerufen wird, wobei ein Netzprofil gemäß der ersten Funktionalitätsebene innerhalb des Netzprofilinformationselements (51) gespeichert ist, wobei das Netzprofil mit der zweiten Identifizierungsinformation (2') in Beziehung steht, und/oder
- die zweite Funktionalitätsebene der Internet Protocol-Adresse zugeordnet wird, falls das Telekommunikationsnetz (5) bestimmt, dass die Beziehung zwischen der ersten und der zweiten Identifizierungsinformation (1, 2') existiert, wobei das Netzprofilinformationselement (51), das die zweite Identifizierungsinformation (2') umfasst, durch das Telekommunikationsnetz (5) in Abhängigkeit von der durch die Anforderungsnachricht bereitgestellten zweiten Identifizierungsinformation (2') abgerufen wird, wobei ein Netzprofil gemäß der zweiten Funktionalitätsebene innerhalb des Netzprofilinformationselements (51) gespeichert ist.

3. Verfahren nach einem der vorangehenden Ansprüche, wobei die zweite Funktionalitätsebene der Internet Protocol-Adresse nur zugeordnet wird,
- falls die AAA-Funktion (40) des Telekommunikationsnetzes (5) bestimmt, dass die Beziehung zwischen der ersten und der zweiten Identifizierungsinformation (1, 2') existiert, und
- falls ein in einem Netzprofilinformationselement (51) gespeichertes Statusinformationselement anzeigt, dass ein Standort der Kundenstandortausrüstung (10) validiert ist, wobei das Netzprofilinformationselement (51) innerhalb einer Netzidentitätsanbieterfunktion (50) des Telekommunikationsnetzes (5) gespeichert ist.

4. Verfahren nach einem der vorangehenden Ansprüche, wobei die erste Identifizierungsinformation (1') eine Kennung der Kundenstandortausrüstung (10) umfasst, die von dem Port (31) des Internet Protocol Edge-Knotens (30) abgeleitet wird, mit dem die Kundenstandortausrüstung (10) verbunden ist.

5. Verfahren nach einem der vorangehenden Ansprüche, wobei das Verfahren den weiteren Schritt umfasst, die erste und/oder die zweite Identifizierungsinformation (1', 2'), die mit der Anforderungsnachricht übertragen wird, und die eine oder die mehreren Internet Protocol-Adressen, die an die Kundenstandortausrüstung (10) übermittelt werden, in einem Speicherelement (41) des Telekommunikationsnetzes (5) zu speichern, wobei das Speicherelement (41) durch die AAA-Funktion (40) des Telekommunikationsnetzes (5) gebildet wird, wobei die AAA-Funktion (40) eine Datenbank für die Internet Protocol-Verbindung zwischen der Kundenstandortausrüstung (10) und dem Telekommunikationsnetz (5) umfasst.

6. Verfahren nach einem der vorangehenden Ansprüche, wobei das Verfahren den weiteren Schritt umfasst, den Standortvalidierungsprozess durchzuführen, um das Zuordnen der zweiten Funktionalitätsebene zu der Internet Protocol-Adresse, die der Kundenstandortausrüstung (10) zugeordnet ist, zu ermöglichen, wobei der Standortvalidierungsprozess unter Verwendung der Internet Protocol-Adresse initiiert wird, die der ersten Funktionalitätsebene zugeordnet ist.

7. Verfahren nach Anspruch 6, wobei der Standortvalidierungsprozess umfasst, für die Internet Protocol-Adresse, die der Internet Protocol-Verbindung zugeordnet ist, die erste und/oder die zweite Identifizierungsinformation (1', 2') aus einem Speicherelement (41) des Telekommunikationsnetzes (5) abzurufen.

8. Verfahren nach Anspruch 6 oder 7, wobei der Standortvalidierungsprozess Folgendes umfasst:
- Speichern, in einem Netzprofilinformationselement (51), einer Information über eine Beziehung zwischen der ersten und/oder der zweiten Identifizierungsinformation (1', 2'),
- Initiieren einer Aktualisierung der in dem Internet Protocol Edge-Knoten (30) gespeicherten Konfigurationsregeln gemäß aus dem Netzprofilinformationselement (51) abgeleiteten Aktualisierungsinformationen, wobei die Konfigurationsregeln mehrere Zugriffs- und Berechtigungsregeln bezüglich verschiedener Ports des Internet Protocol Edge-Knotens (30) sind.

9. Verfahren nach einem der Ansprüche 6 bis 8, wobei der Standortvalidierungsprozess Folgendes umfasst:
- Abrufen, für die Internet Protocol-Adresse, die der Internet Protocol-Verbindung zugeordnet ist, von Standortinformationen von einem Benutzer der Kundenstandortausrüstung (10), und Speichern der Standortinformationen in einem Netzprofilinformationselement (51), wobei die Standortinformationen mit einem physischen Standort der Kundenstandortausrüstung (10) in Beziehung stehen,
- Generieren einer Leitungskennung, die den Internet Protocol Edge-Knoten (30) identifiziert, wobei die Leitungskennung unabhängig von, oder abhängig von, der zweiten Identifizierungsinformation (2'), die mit dem Port (31) des Internet Protocol Edge-Knotens (30) in Beziehung steht, generiert wird,
- Übermitteln der ersten Identifizierungsinformation (1') an die Kundenstandortausrüstung (10).

10. Telekommunikationsnetz (5), das ein Zugangsnetz (2) und ein Kernnetz (3) umfasst, wobei das Telekommunikationsnetz (5) dafür konfiguriert ist, eine Internet Protocol-Netzverbindung einer Kundenstandortausrüstung (10) zu dem Telekommunikationsnetz (5) aufzubauen und/oder zu konfigurieren, wobei das Kernnetz (3) eine Authentifizierungs-, Autorisierungs- und Abrechnungs (Authentication, Authorization, and Accounting, AAA)-Funktion (40) und eine Netzidentitätsanbieter (Network Identity Provider, IDP)-Funktion (50) umfasst, wobei das Telekommunikationsnetz (5) einen Internet Protocol Edge-Knoten (30) umfasst, der dem Zugangsnetz (2) und dem Kernnetz (3) zugeordnet ist, wobei der Internet Protocol Edge-Knoten (30) einen Port (31) umfasst, wobei die Kundenstandortausrüstung (10) dafür konfiguriert ist, eine Anforderungsnachricht zu senden, die eine Internet Protocol-Adresse zum Realisieren einer Internet Protocol-Verbindung zwischen dem Kundenstandortausrüstung (10) und dem Telekommunikationsnetz (5) anfordert, wobei die Anforderungsnachricht eine erste Identifizierungsinformation (1) umfasst, die durch die Kundenstandortausrüstung (10) bereitgestellt wird, und die erste Identifizierungsinformation (1) eine Kennung der Kundenstandortausrüstung (10) umfasst, wobei die Authentifizierungs-, Autorisierungs- und Abrechnungsfunktion (40) dafür konfiguriert ist, die Anforderungsnachricht zu empfangen, die von der Kundenstandortausrüstung (10) über das Zugangsnetz (2) und über den Port (31) des Internet Protocol Edge-Knotens (30) an das Kernnetz (3) gesendet wird, wobei der Internet Protocol Edge-Knoten (30) dafür konfiguriert ist, eine zweite Identifizierungsinformation (2') an die Anforderungsnachricht anzuhängen, wobei die zweite Identifizierungsinformation (2') eine Schnittstellenidentifizierungsinformation ist, die mit dem Port (31) des Internet Protocol Edge-Knotens (30) in Beziehung steht, welcher der Anforderungsnachricht zugeordnet ist, wobei der Internet Protocol Edge-Knoten (30) dafür konfiguriert ist, die erste und die zweite Identifizierungsinformation (1', 2') an die Authentifizierungs-, Autorisierungs- und Abrechnungsfunktion (40) zu senden, wobei das Telekommunikationsnetz (5) dafür konfiguriert ist, die erste und zweite Identifizierungsinformation (1', 2') zu speichern, wobei das Telekommunikationsnetz (5) dafür konfiguriert ist, die Internet Protocol-Adresse an die Kundenstandortausrüstung (10) zum Realisieren der Internet Protocol-Verbindung zu übermitteln, wobei die Authentifizierungs-, Autorisierungs- und Abrechnungsfunktion (40) dafür konfiguriert ist zu bestimmen, ob eine Beziehung zwischen der ersten und der zweiten Identifizierungsinformation (1', 2') innerhalb des Telekommunikationsnetzes (5) existiert, wobei das Telekommunikationsnetz (5) dafür konfiguriert ist, der Internet Protocol-Adresse in Abhängigkeit von der Existenz der Beziehung zwischen der ersten Identifizierungsinformation (1') und der zweiten Identifizierungsinformation (2') eine erste oder eine zweite Funktionalitätsebene zuzuweisen, wobei die erste Funktionalitätsebene einer Internet Protocol-Verbindung mit Standort-unvalidiertem Zustand zugeordnet ist und für den Fall zugewiesen wird, dass die Beziehung zwischen der ersten und der zweiten Identifizierungsinformation (1', 2') innerhalb des Telekommunikationsnetzes (5) nicht existiert, wobei die erste Funktionalitätsebene das Verwenden einer Richtlinie auf dem Internet Protocol Edge-Knoten (30) umfasst, welche die folgenden Eigenschaften aufweist:
- alle Hypertext Transfer Protocol (HTTP)-Anforderungen werden zu einer Dienst-Site umgeleitet, die durch einen Kunden genutzt werden kann, um Hilfe-Leistungen zu erhalten,
- eine Website, die durch die Netzidentitätsanbieterfunktion (50) bereitgestellt wird, kann über die Internet Protocol-Verbindung erreicht werden, die der ersten Funktionalitätsebene zugeordnet ist, dergestalt, dass ein Standortvalidierungsprozess durch den Kunden oder Akteur unter Verwendung der Kundenstandortausrüstung (10) initiiert werden kann,
- der Zugriff auf Ziel-IP-Adressen, die nicht für den Standortvalidierungsprozess oder für Kundenhilfeleistungen benötigt werden, wird gesperrt.

11. Telekommunikationsnetz (5) nach Anspruch 10, wobei der Internet Protocol Edge-Knoten (30) dafür konfiguriert ist, die Internet Protocol-Verbindung der Kundenstandortausrüstung (10) gemäß der ersten und/oder der zweiten Funktionalitätsebene in Abhängigkeit von in dem Internet Protocol Edge-Knoten (30) gespeicherten Konfigurationsregeln zu realisieren, wobei die Konfigurationsregeln entweder IP-Präfixe und Zugriffs- und Berechtigungsregeln in Bezug auf die IP-Präfixe oder nur IP-Präfixe umfassen.

12. Telekommunikationsnetz (5) nach einem der Ansprüche 10 und 11, wobei die Netzidentitätsanbieterfunktion (50) dafür konfiguriert ist, eine durch einen Benutzer der Kundenstandortausrüstung (10) bereitgestellte Standortinformation abzurufen, wobei die Standortinformationen mit einem physischen Standort der Kundenstandortausrüstung (10) in Beziehung stehen, und/oder wobei die Netzidentitätsanbieterfunktion (50) eine Speichervorrichtung zum Speichern eines Netzprofilinformationselements (51) umfasst.

13. Telekommunikationsnetz (5) nach einem der Ansprüche 10 bis 12, wobei die Authentifizierungs-, Autorisierungs- und Abrechnungsfunktion (40) dafür konfiguriert ist,
- die erste und/oder die zweite Identifizierungsinformation (1', 2'), die in der Anforderungsnachricht enthalten sind, zu extrahieren und zu speichern, und/oder
- die Internet Protocol-Adresse, die der Internet Protocol-Verbindung zwischen der Kundenstandortausrüstung (10) und dem Telekommunikationsnetz (5) zugeordnet ist, zu speichern,
- ein Netzprofilinformationselement (51) von der Netzidentitätsanbieterfunktion (50) des Telekommunikationsnetzes (5) abzurufen, und/oder
- die dem Port (31) des Internet Protocol Edge-Knotens (30) zugeordneten Konfigurationsregeln in Abhängigkeit von dem Netzprofilinformationselement (51) zu aktualisieren, und/oder
- die Internet Protocol-Adresse an die Kundenstandortausrüstung (10) zu übermitteln.

14. Telekommunikationsnetz (5) nach einem der Ansprüche 10 bis 13, wobei das Telekommunikationsnetz (5) eine Konfigurationsserverfunktion (60) innerhalb des Kernnetzes (3) umfasst, wobei die Konfigurationsserverfunktion (60) dafür konfiguriert ist, die Kundenstandortausrüstung (10) fernzukonfigurieren und die erste Identifizierungsinformation (1) an die Kundenstandortausrüstung (10) zu übermitteln.

15. Programm, das einen computerlesbaren Programmcode zum Steuern eines Telekommunikationsnetzes (5) umfasst, wobei der Computerprogrammcode, wenn er auf einem oder mehreren Computern ausgeführt wird, den einen oder die mehreren Computer veranlasst, ein Verfahren nach einem der Ansprüche 1 bis 9 ausführen.

## Revendications

1. Procédé permettant d'établir et/ou de configurer une connexion réseau selon le protocole Internet entre un équipement des locaux de client (10) et un réseau de télécommunications (5), le réseau de télécommunications (5) comprenant un réseau d'accès (2) et un réseau central (3), dans lequel le réseau central (3) comprend une fonction d'authentification, d'autorisation et de comptabilité, AAA (*authentication, authorization and accounting*) (40) et une fonction fournisseur d'identité réseau, IDP (*identity provider*) (50), dans lequel un nœud d'extrémité sous protocole Internet (30) est associé au réseau d'accès (2) et au réseau central (3), le procédé comprenant les étapes consistant à :
- transmettre un message de demande depuis l'équipement des locaux de client, CPE (*customer premises equipment*) (10), par le biais du réseau d'accès (2) et par le biais d'un port (31) du nœud d'extrémité sous protocole Internet (30) à la fonction d'authentification, d'autorisation et de comptabilité (40), dans lequel une adresse de protocole Internet permettant de réaliser une connexion selon le protocole Internet entre l'équipement des locaux de client (10) et le réseau de télécommunications (5) est demandée avec le message de demande, dans lequel une première information d'identification (1') est fournie par l'équipement des locaux de client (10) au message de demande, dans lequel la première information d'identification (1') comprend un identificateur de l'équipement des locaux de client (10),
- adjoindre, au moyen du nœud d'extrémité sous protocole Internet (30), une seconde information d'identification (2') au message de demande, dans lequel la seconde information d'identification (2') est une information d'identification d'interface se rapportant au port (31) du nœud d'extrémité sous protocole Internet (30) associé au message de demande, dans lequel les première et seconde informations d'identification (1', 2') sont envoyées depuis le nœud d'extrémité sous protocole Internet (30) à la fonction d'authentification, d'autorisation et de comptabilité (40), dans lequel les première et seconde informations d'identification (1', 2') sont enregistrées dans le réseau de télécommunications (5),
- fournir, au moyen du réseau de télécommunications (5), l'adresse de protocole Internet à l'équipement des locaux de client (10) pour réaliser la connexion selon le protocole Internet,
- déterminer, au moyen de la fonction d'authentification, d'autorisation et de comptabilité (40) s'il existe une relation entre les première et seconde informations d'identification (1', 2') au sein du réseau de télécommunications (5),
- attribuer, à l'adresse de protocole Internet, un premier ou un second niveau de fonctionnalité en fonction de l'existence de la relation entre la première information d'identification (1') et la seconde information d'identification (2'), dans lequel le premier niveau de fonctionnalité est associé à une connexion selon le protocole Internet avec un état non validé d'emplacement et est attribué dans le cas où la relation entre les première et seconde informations d'identification (1', 2') est inexistante au sein du réseau de télécommunications (5), dans lequel le premier niveau de fonctionnalité comprend l'utilisation d'une politique sur le nœud d'extrémité sous protocole Internet (30) comportant les propriétés suivantes :
- toutes les demandes selon le protocole de transfert hypertexte, HTTP (hypertext transfer protocol) sont redirigées vers un site de services qui peut être utilisé par un client pour obtenir des services d'aide,
- un site Web fourni par la fonction fournisseur d'identité réseau (50) est accessible via la connexion selon le protocole Internet associée au premier niveau de fonctionnalité, de manière qu'un processus de validation d'emplacement puisse être lancé par le client ou l'acteur à l'aide de l'équipement des locaux de client (10),
- l'accès à des adresses IP cibles qui ne sont pas nécessaires au processus de validation d'emplacement ou à des services d'aide au client est bloqué.

2. Procédé selon la revendication 1, dans lequel :
- le premier niveau de fonctionnalité est attribué à l'adresse de protocole Internet, si le réseau de télécommunications (5) détermine que les première et seconde informations d'identification (1', 2') n'ont pas de lien entre elles, dans lequel, en particulier, un élément d'information de profil réseau (51) comprenant la seconde information d'identification (2') est récupéré par le réseau de télécommunications (5) en fonction de la seconde information d'identification (2') fournie par le message de demande, dans lequel un profil réseau selon le premier niveau de fonctionnalité est stocké à l'intérieur de l'élément d'information de profil réseau (51), le profil réseau étant lié à la seconde information d'identification (2'), et/ou
- le second niveau de fonctionnalité est attribué à l'adresse de protocole Internet, si le réseau de télécommunications (5) détermine que la relation entre les première et seconde informations d'identification (1', 2') existe, dans lequel l'élément d'information de profil réseau (51) comprenant la seconde information d'identification (2') est récupéré par le réseau de télécommunications (5) en fonction de la seconde information d'identification (2') fournie par le message de demande, dans lequel un profil réseau selon le second niveau de fonctionnalité est stocké à l'intérieur de l'élément d'information de profil réseau (51).

3. Procédé selon l'une des revendications précédentes, dans lequel le second niveau de fonctionnalité n'est attribué à l'adresse de protocole Internet que si :
- la fonction AAA (40) du réseau de télécommunications (5) détermine que la relation entre les première et seconde informations d'identification (1', 2') existe, et
- un élément d'information d'état stocké dans un élément d'information de profil réseau (51) indique qu'un emplacement de l'équipement des locaux de client (10) est validé, dans lequel l'élément d'information de profil réseau (51) est stocké au sein d'une fonction fournisseur d'identité réseau (50) du réseau de télécommunications (5).

4. Procédé selon l'une des revendications précédentes, dans lequel la première information d'identification (1') comprend un identificateur de l'équipement des locaux de client (10), qui découle du port (31) du nœud d'extrémité sous protocole Internet (30) auquel est connecté l'équipement des locaux de client (10).

5. Procédé selon l'une des revendications précédentes, dans lequel le procédé comprend l'étape supplémentaire consistant à stocker, dans un élément de stockage (41) du réseau de télécommunications (5), la ou les première et/ou seconde information(s) d'identification (1', 2') transmise(s) avec le message de demande et l'adresse de protocole Internet ou les adresses de protocole Internet fournie(s) à l'équipement des locaux de client (10), dans lequel l'élément de stockage (41) est compris dans la fonction AAA (40) du réseau de télécommunications (5), dans lequel la fonction AAA (40) comprend une base de données pour la connexion selon le protocole Internet entre l'équipement des locaux de client (10) et le réseau de télécommunications (5).

6. Procédé selon l'une des revendications précédentes, dans lequel le procédé comprend l'étape supplémentaire consistant à exécuter le processus de validation d'emplacement pour permettre l'attribution du second niveau de fonctionnalité à l'adresse de protocole Internet associée à l'équipement des locaux de client (10), dans lequel le processus de validation d'emplacement est lancé à l'aide de l'adresse de protocole Internet associée au premier niveau de fonctionnalité.

7. Procédé selon la revendication 6, dans lequel le processus de validation d'emplacement comprend la récupération, pour l'adresse de protocole Internet associée à la connexion selon le protocole Internet, de la ou des première et/ou seconde information(s) d'identification (1', 2'), dans un élément de stockage (41) du réseau de télécommunications (5).

8. Procédé selon la revendication 6 ou 7, dans lequel le processus de validation d'emplacement comprend les étapes suivantes :
- stocker, dans un élément d'information de profil réseau (51), une information au sujet d'une relation entre la ou les première et/ou seconde information(s) d'identification (1', 2'),
- lancer une mise à jour de règles de configuration stockées au sein du nœud d'extrémité sous protocole Internet (30) selon des informations de mise à jour issues de l'élément d'information de profil réseau (51), dans lequel les règles de configuration sont une pluralité de règles d'accès et de permission concernant différents ports du nœud d'extrémité sous protocole Internet (30).

9. Procédé selon l'une des revendications 6 à 8, dans lequel le processus de validation d'emplacement comprend les étapes suivantes :
- récupérer, pour l'adresse de protocole Internet associée à la connexion selon le protocole Internet, une information d'emplacement auprès d'un utilisateur de l'équipement des locaux de client (10) et stocker l'information d'emplacement dans un élément d'information de profil réseau (51), dans lequel l'information d'emplacement se rapporte à un emplacement physique de l'équipement des locaux de client (10),
- créer un identificateur de ligne identifiant le nœud d'extrémité sous protocole Internet (30), l'identificateur de ligne étant créé indépendamment ou en fonction de la seconde information d'identification (2') se rapportant au port (31) du nœud d'extrémité sous protocole Internet (30),
- fournir la première information d'identification (1') à l'équipement des locaux de client (10).

10. Réseau de télécommunications (5) comprenant un réseau d'accès (2) et un réseau central (3), le réseau de télécommunications (5) étant configuré pour établir et/ou configurer une connexion réseau selon le protocole Internet d'un équipement des locaux de client (10) du réseau de télécommunications (5), dans lequel le réseau central (3) comprend une fonction d'authentification, d'autorisation et de comptabilité, AAA (40) et une fonction fournisseur d'identité réseau, IDP (50), dans lequel le réseau de télécommunications (5) comprend un nœud d'extrémité sous protocole Internet (30) associé au réseau d'accès (2) et au réseau central (3), dans lequel le nœud d'extrémité sous protocole Internet (30) comprend un port (31), dans lequel l'équipement des locaux de client (10) est configuré pour transmettre un message de demande demandant une adresse de protocole Internet permettant de réaliser une connexion selon le protocole Internet entre l'équipement des locaux de client (10) et le réseau de télécommunications (5), dans lequel le message de demande comprend une première information d'identification (1') fournie par l'équipement des locaux de client (10) et la première information d'identification (1') comprend un identificateur de l'équipement des locaux de client (10), dans lequel la fonction d'authentification, d'autorisation et de comptabilité (40) est configurée pour recevoir le message de demande en cours de transmission depuis l'équipement des locaux de client (10) par le biais du réseau d'accès (2) et par le biais du port (31) du nœud d'extrémité sous protocole Internet (30), dans le réseau central (3), dans lequel le nœud d'extrémité sous protocole Internet (30) est configuré pour adjoindre une seconde information d'identification (2') au message de demande, dans lequel la seconde information d'identification (2') est une information d'identification d'interface se rapportant au port (31) du nœud d'extrémité sous protocole Internet (30) associé au message de demande, dans lequel le nœud d'extrémité sous protocole Internet (30) est configuré pour envoyer les première et seconde informations d'identification (1', 2') à la fonction d'authentification, d'autorisation et de comptabilité (40), dans lequel le réseau de télécommunications (5) est configuré pour enregistrer les première et seconde informations d'identification (1', 2'), dans lequel le réseau de télécommunications (5) est configuré pour fournir l'adresse de protocole Internet à l'équipement des locaux de client (10) afin de réaliser la connexion selon le protocole Internet, dans lequel la fonction d'authentification, d'autorisation et de comptabilité (40) est configurée pour déterminer s'il existe une relation entre les première et seconde informations d'identification (1', 2') au sein du réseau de télécommunications (5), dans lequel le réseau de télécommunications (5) est configuré pour attribuer un premier ou un second niveau de fonctionnalité à l'adresse de protocole Internet, en fonction de l'existence de la relation entre la première information d'identification (1') et la seconde information d'identification (2'), dans lequel le premier niveau de fonctionnalité est associé à une connexion selon le protocole Internet avec un état non validé d'emplacement et est attribué dans le cas où la relation entre les première et seconde informations d'identification (1', 2') est inexistante au sein du réseau de télécommunications (5), dans lequel le premier niveau de fonctionnalité comprend l'utilisation d'une politique sur le nœud d'extrémité sous protocole Internet (30) comportant les propriétés suivantes :
- toutes les demandes selon le protocole de transfert hypertexte, HTTP (hypertext transfer protocol) sont redirigées vers un site de services qui peut être utilisé par un client pour obtenir des services d'aide,
- un site Web fourni par la fonction fournisseur d'identité réseau (50) est accessible via la connexion selon le protocole Internet associée au premier niveau de fonctionnalité, de manière qu'un processus de validation d'emplacement puisse être lancé par le client ou l'acteur à l'aide de l'équipement des locaux de client (10),
- l'accès à des adresses IP cibles qui ne sont pas nécessaires au processus de validation d'emplacement ou à des services d'aide au client est bloqué.

11. Réseau de télécommunications (5) selon la revendication 10, dans lequel le nœud d'extrémité sous protocole Internet (30) est configuré pour réaliser la connexion selon le protocole Internet de l'équipement des locaux de client (10) selon le premier et/ou le second niveau de fonctionnalité, en fonction de règles de configuration stockées dans le nœud d'extrémité sous protocole Internet (30), dans lequel les règles de configuration comprennent soit des préfixes IP et des règles d'accès et de permission se rapportant aux préfixes IP soit seulement des préfixes IP.

12. Réseau de télécommunications (5) selon l'une des revendications 10 et 11, dans lequel la fonction fournisseur d'identité réseau (50) est configurée pour récupérer une information d'emplacement fournie par un utilisateur de l'équipement des locaux de client (10), dans lequel l'information d'emplacement se rapporte à un emplacement physique de l'équipement des locaux de client (10), et/ou dans lequel la fonction fournisseur d'identité réseau (50) comprend un dispositif de stockage destiné à stocker un élément d'information de profil réseau (51).

13. Réseau de télécommunications (5) selon l'une des revendications 10 à 12, dans lequel la fonction d'authentification, d'autorisation et de comptabilité (40) est configurée pour :
- extraire et stocker la ou les première et/ou seconde information(s) d'identification (1', 2') incluse(s) dans le message de demande, et/ou
- stocker l'adresse de protocole Internet associée à la connexion selon le protocole Internet entre l'équipement des locaux de client (10) et le réseau de télécommunications (5),
- récupérer un élément d'information de profil réseau (51) à partir de la fonction fournisseur d'identité réseau (50) du réseau de télécommunications (5), et/ou
- mettre à jour les règles de configuration associées au port (31) du nœud d'extrémité sous protocole Internet (30), en fonction de l'élément d'information de profil réseau (51), et/ou
- fournir l'adresse de protocole Internet à l'équipement des locaux de client (10).

14. Réseau de télécommunications (5) selon l'une des revendications 10 à 13, le réseau de télécommunications (5) comprend une fonction serveur de configuration (60) au sein du réseau central (3), la fonction serveur de configuration (60) étant configurée pour configurer à distance l'équipement des locaux de client (10) et fournir la première information d'identification (1') à l'équipement des locaux de client (10).

15. Programme comprenant un code de programme lisible par ordinateur, destiné à commander un réseau de télécommunications (5), le code de programme informatique, lorsqu'il est exécuté sur un ou plusieurs ordinateur(s), fait mettre en œuvre à l'ordinateur ou aux ordinateurs un procédé selon l'une quelconque des revendications 1 à 9.
